# EUROPEAN PATENT SPECIFICATION

(11) **EP 4 160 068 B1**
(45) Date of publication and mention of the grant of the patent: **14.05.2025**
(21) Application number: 21868250.8
(22) Date of filing: 15.07.2021
(51) Int. Cl.: F16K 47/02, F16K 31/04, F25B 41/31

(54) **ELECTRONIC EXPANSION VALVE, REFRIGERANT CIRCULATION PIPELINE, AND AIR CONDITIONER SYSTEM**
ELEKTRONISCHES EXPANSIONSVENTIL, KÄLTEMITTELZIRKULATIONSLEITUNG UND KLIMAANLAGENSYSTEM
SOUPAPE DE DÉTENTE ÉLECTRONIQUE, PIPELINE DE CIRCULATION DE RÉFRIGÉRANT ET SYSTÈME DE CLIMATISEUR

(30) Priority: 18.09.2020 CN 202010991712; 18.09.2020 CN 202022064983 U
(43) Date of publication of application: 05.04.2023
(73) Proprietor: GD Midea Air-Conditioning Equipment Co., Ltd., Foshan, Guangdong 528311 (CN)
(72) Inventor: GAO, Zheming, Foshan, Guangdong 528311 (CN); XU, Xuefei, Foshan, Guangdong 528311 (CN)
(74) Representative: RGTH
(86) International application number: PCT/CN2021/106390
(87) International publication number: WO 2022/057421

(56) References cited:
- EP-A1- 3 171 058
- CN-A- 102 384 311
- CN-A- 106 917 913
- CN-A- 109 114 237
- CN-A- 111 609 154
- CN-U- 202 973 684
- CN-U- 212 318 817
- JP-A- 2004 340 260
- JP-A- 2012 047 213
- JP-A- 2019 007 550

## Description

### TECHNICAL FIELD

The present invention relates to the technical field of electronic expansion valves, in particular to an electronic expansion valve, a refrigerant circulation line and an air conditioner system.

### BACKGROUND

Currently, there is a strong refrigerant sound during the using process of electronic expansion valves. When using such electronic expansion valves, air conditioner manufacturers usually need to add transition tubes or capillary tubes before and after throttling. On the one hand, the noise reduction effect is not obvious and the means is not universal. On the other hand, the pipeline becomes more complicate, the space occupied by the pipeline becomes wider, the number of solder joints increases, and the risk of leakage increases. In addition, it will decrease the production efficiency and increase the manufacturing cost. Therefore, it is necessary to optimize the structure of the electronic expansion valve.

Prior art document EP 3171058 A1 discloses a flow control valve that includes a valve body including a valve chamber and a valve orifice; and a valve element with a curved surface portion adapted to change the flow rate of a fluid through the valve orifice in accordance with the lift amount of the valve element, the curved surface portion having a curvature or a control angle that is increased continuously or in stages toward the tip end of the curved surface portion. The orifice diameter of the valve orifice is sequentially increased in three or more stages in a direction away from the valve chamber.

### SUMMARY

The main objective of the present disclosure is to provide an electronic expansion valve, a refrigerant circulation line and an air conditioner system, aiming to optimize the structure of the electronic expansion valve and achieve a lower refrigerant sound.

In order to achieve the above objective, the present invention provides an electronic expansion valve. The electronic expansion valve comprises a valve seat and a valve needle assembly. The valve seat is formed with a main valve cavity. The valve needle assembly comprises a valve needle sleeve provided inside the main valve cavity. The valve needle sleeve is formed with a needle sleeve cavity and an end wall of the needle sleeve cavity is defined with a main valve port. The main valve port comprises a first deflector hole section, a second deflector hole section and a rectification hole section. The first deflector hole section and the second deflector hole section are distributed along a direction towards an outside of the main valve port. The rectification hole section is provided between the first deflector hole section and the second deflector hole section. The rectification hole section is connected with the first deflector hole section. A hole diameter of the rectification hole section is larger than a hole diameter of the first deflector hole section, so as to form a step between the rectification hole section and an inner wall of the first deflector hole section. The valve needle assembly further comprises a valve needle provided inside the valve needle sleeve and a tip portion of the valve needle is at least partially provided inside the main valve port. L represents a distance between an end face of the tip portion and a bottom wall of the needle sleeve cavity, L₁ represents a length of the first deflector hole section, L₂ represents a length of the rectification hole section and L₃ represents a length of the second deflector hole section. L is not less than L₁+L₂+L₃ and not greater than 1.5(L₁+L₂+L₃).

In an embodiment, D represents the hole diameter of the first deflector hole section and D₁ represents the hole diameter of the rectification hole section. D₁/D is not less than 2.

In an embodiment, an end of the valve needle sleeve forming the main valve port protrudes outwardly from the main valve cavity to form a protruding portion. The electronic expansion valve further comprises a standpipe and an end of the standpipe sleeves externally on the protruding portion. D_{L} represents an inner diameter of the standpipe and D₂ represents an inner diameter of an end of the main valve port. (D_{L}-D₂)/D₂ is not less than 0.1 and not greater than 0.4.

In an embodiment, D₁ represents the hole diameter of the rectification hole section. D₁/D₂ is not less than 0.65 and not greater than 0.85.

In an embodiment, a lateral surface of the protruding portion is shaped like a step. Along the direction towards the outside of the main valve port, the protruding portion comprises a first protruding section with a larger hole diameter and a second protruding section with a smaller hole diameter sequentially connected. The standpipe sleeves externally on the first protruding section and a liquid-standing gap is formed between the second protruding section and the standpipe.

In an embodiment, an inner diameter of the second deflector hole section gradually increases along the direction towards the outside of the main valve port. A lateral surface of an end of the second deflector hole section is connected with an inner wall of the second protruding section.

In an embodiment, L₄ represents a length of the first protruding section and L₅ represents a length of the second protruding section. L₄/L₅ is not less than 0.4 and not greater than 0.85.

In an embodiment, L₂ represents a length of the rectification hole section and L₃ represents a length of the second deflector hole section. (L₂+L₃)/(L₄+L₅) is not less than 0.4 and not greater than 0.85.

In an embodiment, an inner sidewall of the needle sleeve cavity is provided with a main overflow hole communicated with the main valve cavity.

In an embodiment, the electronic expansion valve further comprises a traverse pipe communicated with the main valve cavity. The traverse pipe extends along a radial direction of the valve needle sleeve and the main overflow hole is staggered with the traverse pipe along the direction towards the outside of the main valve port.

In an embodiment, β represents an comprised angle between a centerline of the main overflow hole and a radial plane of the valve needle sleeve. β is not less than 30° and not greater than 60°.

In an embodiment, β is equal to 45°.

In an embodiment, D_{S} represents an inner diameter of the needle sleeve cavity and d represents a hole diameter of the main overflow hole. d is greater than 1.8 mm and less than 0.71D_{S}.

In an embodiment, a plurality of the main overflow holes are spaced along a circumference of the main valve cavity.

In an embodiment, the valve needle assembly further comprises a valve needle provided inside the valve needle sleeve. The valve needle comprises a moving portion and a tip portion. The moving portion is hermetically sealed with and slidably mounted inside the valve needle sleeve. The tip portion is connected with the moving portion and at least partially provided inside the main valve port. The moving portion comprises a covering section at least partially covering the main overflow hole. At least the covering section of the moving portion is provided in a decreased size, so as to form an annular communicating cavity communicated with the main overflow hole between the covering section and the valve needle sleeve.

In an embodiment, D_{f2} represents an outer diameter of the covering section and D_{S} represents an inner diameter of the needle sleeve cavity. D_{f2}/D_{S} is greater than 0.8 and less than 0.98.

In an embodiment, Lₚ represents a distance between an end face of the covering section away from the main valve port and an end face of the valve needle sleeve away from the main valve port. Lₚ/D_{S} is not less than 0.8 and not greater than 1.7.

In an embodiment, the valve needle assembly comprises a valve needle provided inside the valve needle sleeve. The valve needle is movable along a length direction of the valve needle sleeve for adjustment, and a tip portion of the valve needle is provided at least partially inside the main valve port.

The present invention further provides a refrigerant circulation line. The refrigerant circulation line comprises an electronic expansion valve according to the invention.

The present invention further provides an air conditioner system. The air conditioner system comprises a refrigerant circulation line. The refrigerant circulation line comprises an electronic expansion valve according to the invention.

In those technical solutions provided by the disclosure, the valve seat is formed with a main valve cavity. An end wall of the needle sleeve cavity is defined with a main valve port. The main valve port comprises a first deflector hole section, a second deflector hole section and a rectification hole section. The first deflector hole section and the second deflector hole section are distributed along a direction towards an outside of the main valve port. The rectification hole section is provided between the first deflector hole section and the second deflector hole section. The rectification hole section and an inner wall of the first deflector hole section cooperatively form a step. When the electronic expansion valve is working, the refrigerant passes through the rectification hole section. Meanwhile, the turbulence will be formed at a location of the rectification hole section corresponding to the step. The turbulence may guide the refrigerant at the central position of main valve port to flow to play a flexible guide effect, thereby improving the flowing state of the refrigerant at the main valve port and effectively reducing the refrigerant noise.

### BRIEF DESCRIPTION OF THE DRAWINGS

In order to more clearly illustrate the embodiments of the present disclosure, drawings used in the embodiments will be briefly described below. Obviously, the drawings in the following description are only some embodiments of the present disclosure. It will be apparent to those skilled in the art that other figures can be obtained according to the structures shown in the drawings without creative work.
FIG. 1 is a schematic cross-sectional view of an electronic expansion valve according to a first embodiment of the present disclosure.
FIG. 2 is a schematic cross-sectional view of a valve needle sleeve assembled with a valve needle in FIG. 1.
FIG. 3 is a schematic cross-sectional view of a valve needle sleeve in FIG. 1.
FIG. 4 is a schematic cross-sectional view of a valve needle in FIG. 1.
FIG. 5 is a schematic cross-sectional view of an electronic expansion valve according to a second embodiment of the present disclosure.
FIG. 6 is a schematic cross-sectional view of a valve needle sleeve assembled with a valve needle in FIG. 5.
FIG. 7 is a schematic cross-sectional view of a valve needle sleeve in FIG. 5.
FIG. 8 is a schematic cross-sectional view of a valve needle in FIG. 5.

**Description of reference signs**

| Reference sign | Name | Reference sign | Name |
|---|---|---|---|
| 100 | electronic expansion valve | 2131 | first protruding section |
| 1 | valve seat | 2132 | second protruding section |
| 11 | main valve cavity | 214 | main overflow hole |
| 2 | valve needle assembly | 22 | valve needle |
| 21 | valve needle sleeve | 221 | tip portion |
| 211 | needle sleeve cavity | 222 | moving portion |
| 212 | main valve port | 2221 | covering section |
| 2121 | first deflector hole section | 3 | standpipe |
| 2122 | second deflector hole section | 31 | liquid-standing gap |
| 2123 | rectification hole section | 4 | traverse pipe |
| 213 | protruding portion | 5 | annular communicating cavity |

The realization of the objective, functional characteristics, and advantages of the present disclosure are further described with reference to the accompanying drawings.

### DETAILED DESCRIPTION OF THE EMBODIMENTS

The technical solutions of embodiments of the present invention will be clearly and completely described with reference to the drawings of the present disclosure. Obviously, the described embodiments are only some rather than all of the embodiments of the present disclosure.

It should be noted that all directional indicators (such as up, down, left, right, front, rear, etc.) in the embodiments of the present disclosure are only used to explain the relative positional relationship, movement situation, etc. among components in a specific attitude (as shown in the drawings). If the specific attitude changes, the directional indication also changes accordingly.

In addition, the descriptions related to "first", "second" and the like in the present disclosure are merely for descriptive purposes, and should not be understood as indicating or implying their relative importance or implicitly indicating the number of technical features indicated. Therefore, the features defined by "first" and "second" may explicitly or implicitly include at least one such feature. Besides, the various embodiments can be combined with each other, but the combination must be based on what can be achieved by those skilled in the art. When the combination of the embodiments is contradictory or cannot be achieved, it should be considered that such combination does not exist, or is not within the scope of the present disclosure.

Currently, there is a strong refrigerant sound during the using process of electronic expansion valves. When using such electronic expansion valves, air conditioner manufacturers usually need to add transition tubes or capillary tubes before and after throttling. On the one hand, the noise reduction effect is not obvious and the means is not universal. On the other hand, the pipeline becomes more complicate, the space occupied by the pipeline becomes wider, the number of solder joints increases, and the risk of leakage increases. In addition, it will decrease the production efficiency and increase the manufacturing cost. Therefore, it is necessary to optimize the structure of the electronic expansion valve.

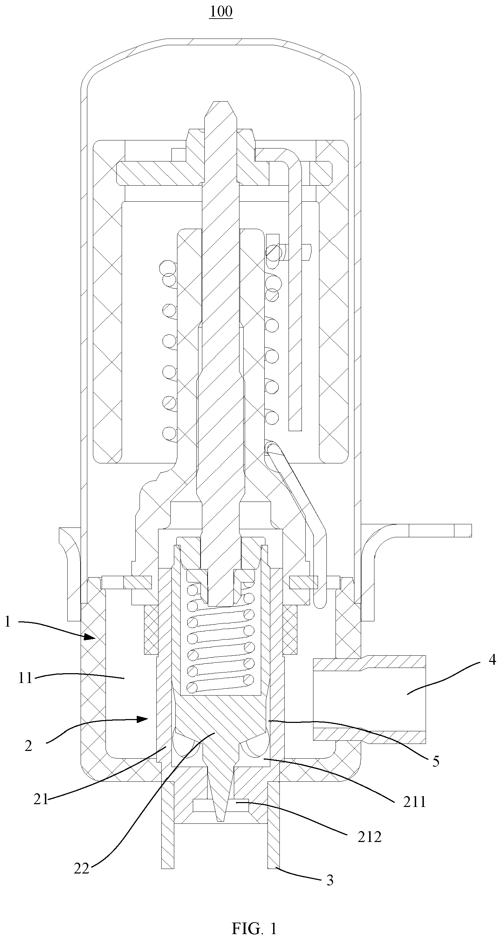

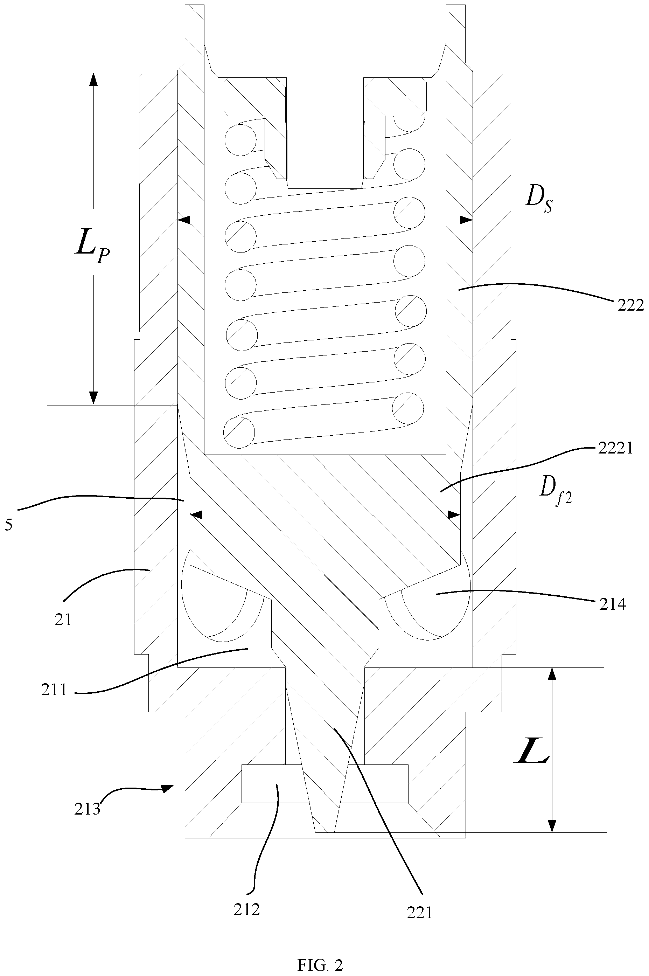

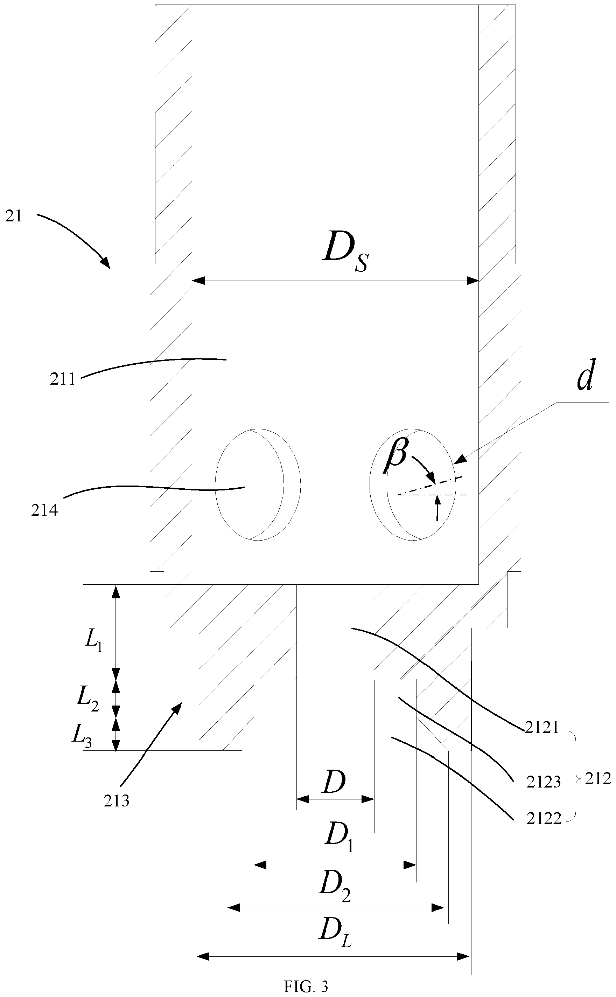

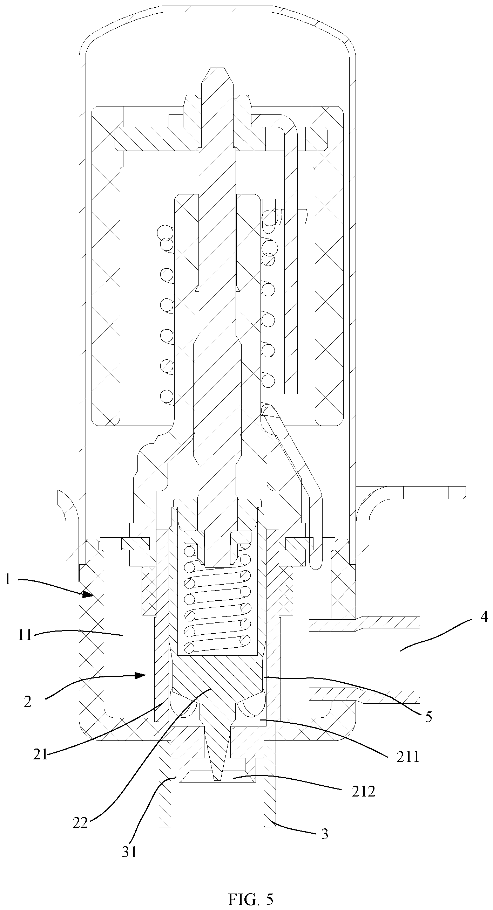

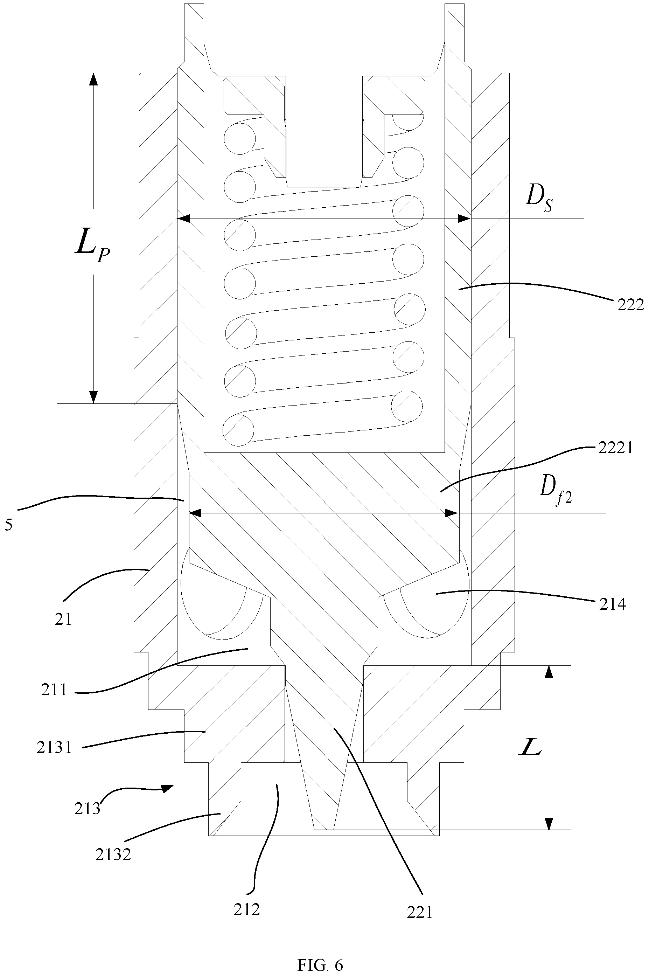

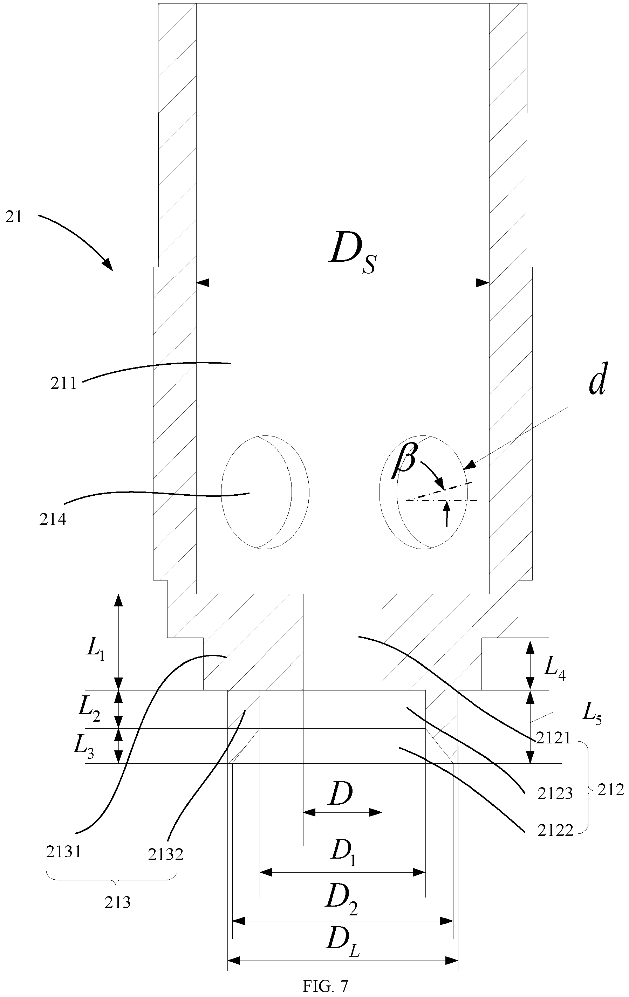

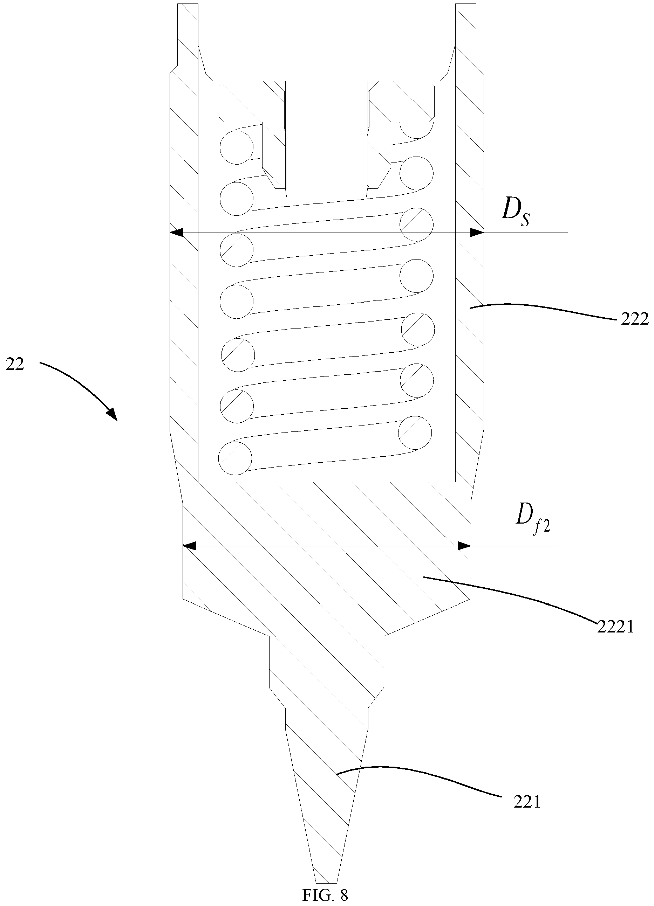

In view of this, the present disclosure provides an electronic expansion valve 100. FIG.1 to FIG. 8 are schematic views of electronic expansion valve 100s according to some embodiments of the present disclosure.

As shown in FIG. 1 to FIG. 4, the electronic expansion valve 100 comprises a valve seat 1 and a valve needle assembly 2. The valve seat 1 is formed with a main valve cavity 11 and the valve needle assembly 2 comprises a valve needle sleeve 21 provided inside the main valve cavity 11. The valve needle sleeve 21 is formed with a needle sleeve cavity 211 and an end wall of the needle sleeve cavity 211 is defined with a main valve port 212. The main valve port 212 comprises a first deflector hole section 2121, a second deflector hole section 2122 and a rectification hole section 2123. The first deflector hole section 2121 and the second deflector hole section 2122 are distributed along a direction towards an outside of the main valve port 212 and the rectification hole section 2123 is provided between the first deflector hole section 2121 and the second deflector hole section 2122. The rectification hole section 2123 is connected with the first deflector hole section 2121. In addition, the hole diameter of the rectification hole section 2123 is larger than the hole diameter of the first deflector hole section 2121 to make the rectification hole section 2123 and an inner wall of the first deflector hole section 2121 cooperatively form a step.

In the technical solutions of the disclosure, the valve seat 1 is formed with a main valve cavity 11 and the valve needle assembly 2 comprises a valve needle sleeve 21 provided inside the main valve cavity 11. The valve needle sleeve 21 is formed with a needle sleeve cavity 211 and an end wall of the needle sleeve cavity 211 is defined with a main valve port 212. The main valve port 212 comprises a first deflector hole section 2121, a second deflector hole section 2122 and a rectification hole section 2123. The first deflector hole section 2121 and the second deflector hole section 2122 are distributed along a direction towards an outside of the main valve port 212 and the rectification hole section 2123 is provided between the first deflector hole section 2121 and the second deflector hole section 2122. The rectification hole section 2123 is connected with the first deflector hole section 2121. In addition, the hole diameter of the rectification hole section 2123 is larger than the hole diameter of the first deflector hole section 2121 to make the rectification hole section 2123 and an inner wall of the first deflector hole section 2121 cooperatively form a step. When the electronic expansion valve 100 is working, the refrigerant passes through the rectification hole section 2123. Meanwhile, the turbulence will be formed at a location of the rectification hole section 2123 corresponding to the step. The turbulence may guide the refrigerant at the central position of main valve port 212 to flow to play a flexible guide effect, thereby improving the flowing state of the refrigerant at the main valve port 212 and effectively reducing the refrigerant noise.

It should be noted that the valve needle assembly 2 comprises a valve needle 22 provided inside the valve needle sleeve 21. The valve needle 22 is adjustable to move along a length direction of the valve needle sleeve 21 and a tip portion 221 of the valve needle 22 is provided at least partially inside the main valve port 212. By controlling the movement of the valve needle 22 along the length direction of the valve needle sleeve 21, the gap between the needle sleeve cavity 211 and the main valve port 212 is adjusted to intercommunicate the main valve cavity 11 and the main valve port 212, thereby changing the pressure of the liquid in the main valve cavity 11 and the main valve port 212.

In addition, the electronic expansion valve 100 also comprises a driving mechanism for driving the valve needle 22. The driving mechanism comprises a rotor member, a stator member, a thread driving member, and a stop member. The above structures cooperate with each other to realize the movement of the valve needle 22 along the length direction of the valve needle sleeve 21. It should be noted that the driving mechanism is applied in the electronic expansion valve 100 in the prior art, which will not be described in detail here. In addition, the entire sealing structure of the electronic expansion valve 100 is also applied in the electronic expansion valve 100 in the prior art, and will not be described in detail here.

In the flowing path of the electronic expansion valve 100, the liquid flows in from or out to the side of the electronic expansion valve 100, that is, the liquid flows in or out along a axial direction. In order to reduce the refrigerant noise made in the entire flowing path, in the embodiment of the present disclosure, improvements are made to the relevant structures on the horizontal flowing path, and also to the relevant structures on the vertical flowing path.

As for the structural improvement on the vertical flowing path, it is mainly to optimize the structure of the main valve port 212. As mentioned above, a rectification hole section 2123 is added between the first deflector hole section 2121 and the second deflector hole section 2122, thereby flexibly guiding the liquid, improving the flowing state of the refrigerant at the main valve port 212, and effectively reducing the noise of the refrigerant. It should be noted that the number of the rectification hole sections 2123 may be one, two or more, which is not limited.

The following will only illustrate the embodiments with one rectification hole section 2123. The refrigerant noise is affected by the size relationship among every hole section of the main valve port 212. In an embodiment, D represents the hole diameter of the first deflector hole section 2121 and D₁ represents the hole diameter of the rectification hole section 2123, and D₁/D is not less than 2. On the one hand, the flowing of the refrigerant should be fully considered. On the other hand, the turbulence will be formed at a location of the rectification hole section 2123 corresponding to the step. Taking the above factors into consideration, when D₁/D is not less than 2, the noise of the refrigerant can be significantly reduced, which has a good effect.

The valve needle 22 limits the middle segment shape of the fluid flowing in from or out to the main valve port 212, and the inner side wall of the main valve port 212 limits the edge segment shape of the fluid flowing in from or out to the main valve port 212. Both of the above two have a great influence on the flowing of refrigerant. In an embodiment, the valve needle assembly 2 further comprises a valve needle 22 provided inside the valve needle sleeve 21. The tip portion 221 of the valve needle 22 is at least partially provided inside the main valve port 212. L represents a distance between an end face of the tip portion 221 and a bottom wall of the needle sleeve cavity 211; L₁ represents a length of the first deflector hole section 2121; L₂ represents a length of the rectification hole section 2123; and L₃ represents a length of the second deflector hole section 2122, and L is not less than L₁+L₂+L₃ and not greater than 1.5(L₁+L₂+L₃). If the length of the tip portion 221 of the valve needle 22 is too short, it would not provide a good flow guiding effect. If the length of the tip portion 221 of the valve needle 22 is too long, the processing would become more difficult and the processing cost would increase.

In an embodiment, an end forming the main valve port 212 of the valve needle sleeve 21 protrudes outwardly from the main valve cavity 11 to form a protruding portion 213. The electronic expansion valve 100 further comprises a standpipe 3 and an end of the standpipe 3 sleeve externally on the protruding portion 213. D_{L} represents an inner diameter of the standpipe 3 and D₂ represents an inner diameter of an end of the main valve port 212, and (D_{L}-D₂)/D₂ is not less than 0.1 and not greater than 0.4. If the ratio is too small, the guiding effect will not be achieved. If the ratio is too large, the guiding effect will be too strong, and a strong secondary flow will be formed before the second shrinkage guiding section. When (D_{L}-D₂)/D₂ is not less than 0.1 and not greater than 0.4, it can not only play a better guiding role, but also weaken the secondary flow, thereby achieving a good flow guiding effect.

In an embodiment, D₁ represents the hole diameter of the rectification hole section 2123 and D₁/D₂ is not less than 0.65 and not greater than 0.85. Within this range, the refrigerant diversion between the second deflector hole section 2122 and the rectification hole section 2123 is stable.

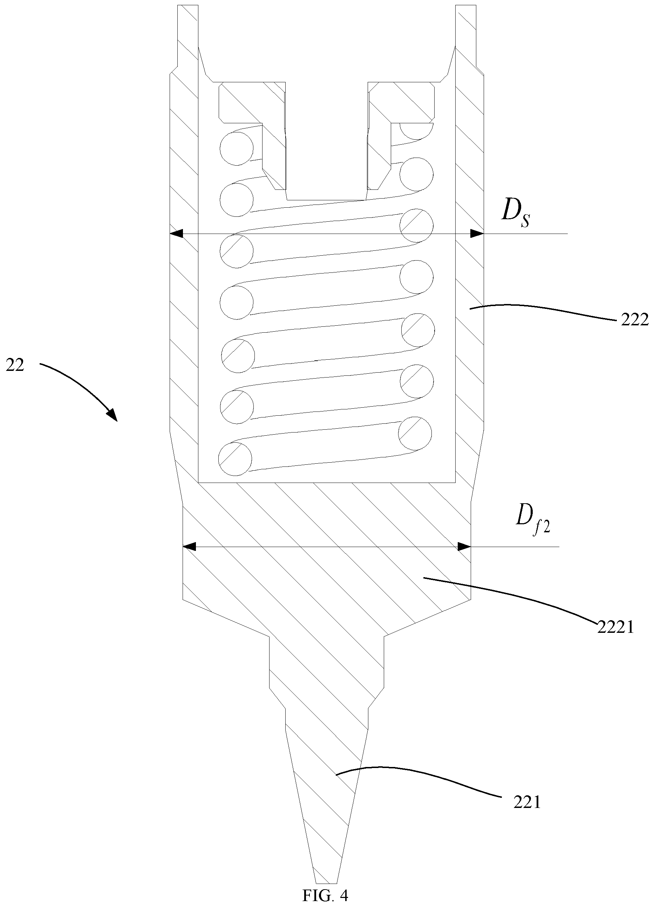

As shown from FIG. 4 to FIG. 8, there are some schematic structural views according to a second embodiment of the present disclosure. In the embodiment, a lateral surface of the protruding portion 213 is shaped like a step. The protruding portion 213 comprises a first protruding section 2131 with a larger hole diameter and a second protruding section 2132 with a smaller hole diameter sequentially connected along the direction towards the outside of the main valve port 212. The standpipe 3 sleeves externally on the first protruding section 2131 and a liquid-standing gap 31 is formed between the second protruding section 2132 and the standpipe 3. At this time, the refrigerant in the liquid-standing gap 31 may guide the refrigerant flowing through the inner wall of the standpipe 3 to flow to play a flexible guide effect, thereby improving the flowing state of the refrigerant at the main valve port 212, reducing the friction between the refrigerant and the protruding portion 213 and effectively reducing the refrigerant noise of the electronic expansion valve 100.

In addition, in an embodiments, along the direction towards the outside of the main valve port 212, an inner diameter of the second deflector hole section 2122 is configured to gradually increase, and a lateral surface of an end of the second deflector hole section 2122 is connected with an inner wall of the second protruding section 2132. In this way, it further reduce the friction between the refrigerant and the protruding portion 213, thereby effectively reducing the refrigerant noise of the electronic expansion valve 100.

The size of the liquid-standing gap 31 is a factor that affects the refrigerant noise. In an embodiment, L₄ represents a length of the first protruding section 2131 and L₅ represents a length of the second protruding section 2132, and L₄/L₅ is not less than 0.4 and not greater than 0.85. Within this size relationship range, the refrigerant noise of the electronic expansion valve 100 is reduced obviously, thereby having a better effect.

Moreover, a size relationship between the inner wall of the main valve port 212 and the lateral surface of the protruding portion 213 also affects the refrigerant sound. In an embodiment, L₂ represents a length of the rectification hole section 2123 and L₃ represents a length of the second deflector hole section 2122, and (L₂+L₃)/(L₄+L₅) is not less than 0.4 and not greater than 0.85. Within this size relationship range, the refrigerant noise of the electronic expansion valve 100 is reduced obviously, thereby having a better effect.

An inner sidewall of the needle sleeve cavity 211 is provided with a main overflow hole 214 communicated with the main valve cavity 11. The needle sleeve cavity 211 is communicated with the main valve cavity 11 via the main overflow hole 214. In an embodiment, the electronic expansion valve 100 further comprises a traverse pipe 4 communicated with the main valve cavity 11. The traverse pipe 4 extends along a radial direction of the valve needle sleeve 21, and the main overflow hole 214 is staggered with the traverse pipe 4 along the direction towards the outside of the main valve port 212. In this way, the influence exerted by the impact energy of the refrigerant on the flowing of the refrigerant is reduced, which result in that the refrigerant is imported from the traverse pipe 4. After the refrigerant filling the main valve cavity 11, the refrigerant enters into the needle sleeve cavity 211 through the main overflow hole 214. In another way, the refrigerant enters into the main valve cavity 11 from the needle sleeve cavity 211, fills the main valve cavity 11, and then is exported to the traverse pipe 4, which may reduce the flow rate of the refrigerant which exerts impact to valve needle 22, thereby improving the reliability and durability.

It should be noted that the number of the main overflow holes 214 may be plural and a plurality of the main overflow holes 214 are spaced along a circumference of the main valve cavity 11, which may ensure the fluidity of the refrigerant between the main valve cavity 11 and the needle sleeve cavity 211.

In order to avoid the direct impact of the refrigerant on the valve needle 22 and the abnormal refrigerant sound caused, in an embodiment, β represents an comprised angle between a centerline of the main overflow hole 214 and a radial plane of the valve needle sleeve 21, and β is not less than 30° and not greater than 60°. A better value is that β is equal to 45°. In this way, the flow rate of the refrigerant is ensured, and at the same time, the direct impact of the refrigerant on the valve needle 22 is reduced as much as possible, which may further reduce the noise of the refrigerant.

In an embodiment, D_{S} represents an inner diameter of the needle sleeve cavity 211 and d represents a hole diameter of the main overflow hole 214, d is greater than 1.8 mm and less than 0.71D_{S}. Within the range of this size relationship, the noise of the refrigerant can be significantly reduced, which has a good effect. In addition, the lower edge of the main overflow hole 214 can be provided at the position adjacent to the bottom wall of the main valve cavity 11.

In order to reduce the shaking between the valve needle sleeve 21 and the valve sleeve, the gap between the two is very small. However, after the overflow hole is enlarged, the valve needle sleeve 21 will block a part of the overflow hole in the fully closed state, resulting in obstruction of the flowing. In an embodiment, the valve needle assembly 2 further comprises a valve needle 22 provided inside the valve needle sleeve 21. The valve needle 22 comprises a moving portion 222 hermetically sealed with and slidably mounted inside the valve needle sleeve 21 and a tip portion 221 connected with the moving portion 222 and at least partially provided inside the main valve port 212. The moving portion 222 comprises a covering section 2221 at least partially covering the main overflow hole 214, and at least the covering section 2221 of the moving portion 222 is provided in a decreased size, so as to form an annular communicating cavity 5 communicated with the main overflow hole 214 between the covering section 2221 and the valve needle sleeve 21. The covered part of the main overflow hole 214 is communicated by the annular communicating cavity 5, thereby reducing the influence on the refrigerant and improving the efficiency of the electronic expansion valve 100.

In an embodiment, D_{f2} represents an outer diameter of the covering section 2221 and D_{S} represents an inner diameter of the needle sleeve cavity 211, and D_{f2}/D_{S} is greater than 0.8 and less than 0.98. Within the range of this size relationship, the flowing state of the refrigerant is improved.

In an embodiment, Lₚ represents a distance between an end face of the covering section 2221 away from the main valve port 212 and an end face of the valve needle sleeve 21 away from the main valve port 212, and Lₚ/D_{S} is not less than 0.8 and not greater than 1.7. In this way, the vibration of the valve needle 22 caused by the impact of the refrigerant is reduced, and the noise of the refrigerant of the electronic expansion valve 100 is significantly improved, which has a good effect.

The present disclosure further provides a refrigerant circulation line. The refrigerant circulation line comprises an electronic expansion valve. The refrigerant circulation line comprises all technical solutions of the electronic expansion valve above-mentioned. Thus, it has at least all the beneficial effects brought by the technical solutions of the above-mentioned embodiments, which will not be repeated here.

The present disclosure further provides an air conditioner system. The air conditioner system comprises a refrigerant circulation line. The refrigerant circulation line comprises an electronic expansion valve. The air conditioner system comprises all technical solutions of the refrigerant circulation line above-mentioned. Thus, it has at least all the beneficial effects brought by the technical solutions of the above-mentioned embodiments, which will not be repeated here.

The above are only some embodiments of the present disclosure, and do not limit the scope of the present disclosure thereto. Therefore the invention is solely limited by the appended claims.

## Claims

1. An electronic expansion valve (100), comprising:
a valve seat (1) formed with a main valve cavity (11); and
a valve needle assembly (2) comprising a valve needle sleeve (21) provided inside the main valve cavity (11),
wherein the valve needle sleeve (21) is formed with a needle sleeve cavity (211) and an end wall of the needle sleeve cavity (211) is defined with a main valve port (212),
the main valve port (212) comprises:
a first deflector hole section (2121);
a second deflector hole section (2122), wherein the first deflector hole section (2121) and the second deflector hole section (2122) being distributed along a direction towards an outside of the main valve port (212); and
a rectification hole section (2123) provided between the first deflector hole section (2121) and the second deflector hole section (2122), wherein the rectification hole section (2123) being connected with the first deflector hole section (2121), and
wherein a hole diameter of the rectification hole section (2123) is larger than a hole diameter of the first deflector hole section (2121), so as to form a step between the rectification hole section (2123) and an inner wall of the first deflector hole section (2121),
wherein the valve needle assembly (2) further comprises a valve needle (22) provided inside the valve needle sleeve (21),
a tip portion (221) of the valve needle (22) is at least partially provided inside the main valve port (212),
**characterized in that,**
L represents a distance between an end face of the tip portion (221) and a bottom wall of the needle sleeve cavity (211); L₁ represents a length of the first deflector hole section (2121); L₂ represents a length of the rectification hole section (2123); and L₃ represents a length of the second deflector hole section (2122), and
L is not less than L₁+L₂+L₃ and not greater than 1.5(L₁+L₂+L₃).

2. The electronic expansion valve (100) of claim 1, wherein:
D represents the hole diameter of the first deflector hole section (2121) and D₁ represents the hole diameter of the rectification hole section (2123), and
D₁/D is not less than 2.

3. The electronic expansion valve (100) of claim 1, wherein:
an end of the valve needle sleeve (21) forming the main valve port (212) protrudes outwardly from the main valve cavity (11) to form a protruding portion (213),
the electronic expansion valve (100) further comprises a standpipe (3), and an end of the standpipe (3) sleeves externally on the protruding portion (213),
D_{L} represents an inner diameter of the standpipe (3) and D₂ represents an inner diameter of an end of the main valve port (212), and
(D_{L}-D₂)/D₂ is not less than 0.1 and not greater than 0.4.

4. The electronic expansion valve (100) of claim 3, wherein:
D₁ represents the hole diameter of the rectification hole section (2123), and
D₁/D₂ is not less than 0.65 and not greater than 0.85.

5. The electronic expansion valve (100) of claim 3, wherein:
a lateral surface of the protruding portion (213) is shaped like a step,
along the direction towards the outside of the main valve port (212), the protruding portion (213) comprises a first protruding section (2131) with a larger hole diameter and a second protruding section (2132) with a smaller hole diameter, wherein the first protruding section (2131) and the second protruding section (2132) being sequentially connected, and
the standpipe (3) sleeves externally on the first protruding section (2131), and a liquid-standing gap (31) is formed between the second protruding section (2132) and the standpipe (3).

6. The electronic expansion valve (100) of claim 5, wherein:
an inner diameter of the second deflector hole section (2122) gradually increases along the direction towards the outside of the main valve port (212), and
a lateral surface of an end of the second deflector hole section (2122) is connected with an inner wall of the second protruding section (2132); and/or wherein:
L₄ represents a length of the first protruding section (2131) and L₅ represents a length of the second protruding section (2132), and
L₄/L₅ is not less than 0.4 and not greater than 0.85.

7. The electronic expansion valve (100) of claim 6, wherein:
L₂ represents a length of the rectification hole section (2123) and L₃ represents a length of the second deflector hole section (2122), and
(L₂+L₃)/(L₄+L₅) is not less than 0.4 and not greater than 0.85.

8. The electronic expansion valve (100) of claim 1, wherein an inner sidewall of the needle sleeve cavity (211) is provided with a main overflow hole (214) communicated with the main valve cavity (11).

9. The electronic expansion valve (100) of claim 8, wherein:
the electronic expansion valve (100) further comprises a traverse pipe (4) communicated with the main valve cavity (11),
the traverse pipe (4) extends along a radial direction of the valve needle sleeve (21), and
the main overflow hole (214) is staggered with the traverse pipe (4) along the direction towards the outside of the main valve port (212); and/or wherein:
β represents an included angle between a centerline of the main overflow hole (214) and a radial plane of the valve needle sleeve (21), and
β is not less than 30° and not greater than 60°;wherein β preferably is equal to 45°.

10. The electronic expansion valve (100) of claim 8, wherein:
D_{S} represents an inner diameter of the needle sleeve cavity (211) and d represents a hole diameter of the main overflow hole (214), and
d is greater than 1.8 mm and less than 0.71D_{S}; and/or wherein a plurality of the main overflow holes (214) are spaced along a circumference of the main valve cavity (11).

11. The electronic expansion valve (100) of claim 8, wherein:
the valve needle assembly (2) further comprises a valve needle (22) provided inside the valve needle sleeve (21),
the valve needle (22) comprises:
a moving portion (222) hermetically sealed with and slidably mounted inside the valve needle sleeve (21); and
a tip portion (221) connected with the moving portion (222) and at least partially provided inside the main valve port (212),
the moving portion (222) comprises a covering section (2221) at least partially covering the main overflow hole (214), and
at least the covering section (2221) of the moving portion (222) is provided in a decreased size, so as to form an annular communicating cavity (5) communicated with the main overflow hole (214) between the covering section (2221) and the valve needle sleeve (21).

12. The electronic expansion valve (100) of claim 11, wherein:
D_{f2} represents an outer diameter of the covering section (2221) and D_{S} represents an inner diameter of the needle sleeve cavity (211), and
D_{f2}/D_{S} is greater than 0.8 and less than 0.98;wherein:
Lₚ preferably represents a distance between an end face of the covering section (2221) away from the main valve port (212) and an end face of the valve needle sleeve (21) away from the main valve port (212), and
Lₚ/D_{S} preferably is not less than 0.8 and not greater than 1.7.

13. The electronic expansion valve (100) of claim 1, wherein:
the valve needle assembly (2) comprises a valve needle (22) provided inside the valve needle sleeve (21),
the valve needle (22) is movable along a length direction of the valve needle sleeve (21) for adjustment, and
a tip portion (221) of the valve needle (22) is provided at least partially inside the main valve port (212).

14. A refrigerant circulation line, **characterized by** comprising an electronic expansion valve (100) of any one of claims 1 to 13.

15. An air conditioner system, **characterized by** comprising a refrigerant circulation line of claim 14.

## Patentansprüche

1. Elektronisches Expansionsventil (100), umfassend:
einen Ventilsitz (1), der mit einem Hauptventilhohlraum (11) ausgebildet ist; und
eine Ventilnadelanordnung (2) umfassend eine Ventilnadelhülse (21), die im Inneren des Hauptventilhohlraums (11) vorgesehen ist,
wobei die Ventilnadelhülse (21) mit einem Nadelhülsenhohlraum (211) ausgebildet ist und eine Endwand des Nadelhülsenhohlraums (211) mit einem Hauptventilanschluss (212) definiert ist,
der Hauptventilanschluss (212) Folgendes umfasst:
einen ersten Deflektorlochabschnitt (2121);
einen zweiten Deflektorlochabschnitt (2122), wobei der erste Deflektorlochabschnitt (2121) und der zweite Deflektorlochabschnitt (2122) entlang einer Richtung zu einer Außenseite des Hauptventilanschlusses (212) hin verteilt sind; und
einen Rektifikationslochabschnitt (2123), der zwischen dem ersten Deflektorlochabschnitt (2121) und dem zweiten Deflektorlochabschnitt (2122) vorgesehen ist, wobei der Rektifikationslochabschnitt (2123) mit dem ersten Deflektorlochabschnitt (2121) verbunden ist, und
wobei ein Lochdurchmesser des Rektifikationslochabschnitts (2123) größer ist als ein Lochdurchmesser des ersten Deflektorlochabschnitts (2121), um eine Stufe zwischen dem Rektifikationslochabschnitt (2123) und einer Innenwand des ersten Deflektorlochabschnitts (2121) auszubilden
wobei die Ventilnadelanordnung (2) ferner eine Ventilnadel (22) umfasst, die im Inneren der Ventilnadelhülse (21) vorgesehen ist,
ein Spitzenbereich (221) der Ventilnadel (22) zumindest teilweise innerhalb des Hauptventilanschlusses (212) vorgesehen ist,
**dadurch gekennzeichnet,**
L einen Abstand zwischen einer Endfläche des Spitzenbereichs (221) und einer Bodenwand des Nadelhülsenhohlraums (211) darstellt; L₁ eine Länge des ersten Deflektorlochabschnitts (2121) darstellt; L₂ eine Länge des Rektifikationslochabschnitts (2123) darstellt; und L₃ eine Länge des zweiten Deflektorlochabschnitts (2122) darstellt, und
L nicht kleiner als L₁+L₂+L₃ und nicht größer als 1,5(L₁+L₂+L₃) ist.

2. Elektronisches Expansionsventil (100) gemäß Anspruch 1, wobei:
D den Lochdurchmesser des ersten Deflektorlochabschnitts (2121) darstellt und D₁ den Lochdurchmesser des Rektifikationslochabschnitts (2123) darstellt, und
D₁/D ist nicht kleiner als 2.

3. Elektronisches Expansionsventil (100) gemäß Anspruch 1, wobei:
ein Ende der Ventilnadelhülse (21), das den Hauptventilanschluss (212) ausbildet, aus dem Hauptventilhohlraum (11) nach außen ragt, um einen vorstehenden Bereich (213) auszubilden,
das elektronische Expansionsventil (100) ferner ein Standrohr (3) umfasst und ein Ende des Standrohrs (3) außen auf den vorstehenden Bereich (213) aufgesteckt ist,
D_{L} einen Innendurchmesser des Standrohrs (3) darstellt und D₂ einen Innendurchmesser eines Endes des Hauptventilanschlusses (212) darstellt, und
(D_{L}-D₂)/D₂ nicht kleiner als 0,1 und nicht größer als 0,4 ist.

4. Elektronisches Expansionsventil (100) gemäß Anspruch 3, wobei:
D₁ den Lochdurchmesser des Rektifikationslochabschnitts (2123) darstellt, und
D₁/D₂ nicht kleiner als 0,65 und nicht größer als 0,85 ist.

5. Elektronisches Expansionsventil (100) gemäß Anspruch 3, wobei:
eine Seitenfläche des vorspringenden Bereichs (213) wie eine Stufe geformt ist,
der vorstehende Bereich (213) entlang der Richtung zur Außenseite des Hauptventilanschlusses (212) einen ersten vorstehenden Abschnitt (2131) mit einem größeren Lochdurchmesser und einen zweiten vorstehenden Abschnitt (2132) mit einem kleineren Lochdurchmesser umfasst, wobei der erste vorstehende Abschnitt (2131) und der zweite vorstehende Abschnitt (2132) aufeinanderfolgend verbunden sind, und
das Standrohr (3) außen auf den ersten vorspringenden Abschnitt (2131) aufgeschoben wird und zwischen dem zweiten vorspringenden Abschnitt (2132) und dem Standrohr (3) ein flüssigkeitsführender Spalt (31) gebildet wird.

6. Elektronisches Expansionsventil (100) gemäß Anspruch 5, wobei:
ein Innendurchmesser des zweiten Deflektorlochabschnitts (2122) entlang der Richtung zur Außenseite des Hauptventilanschlusses (212) allmählich zunimmt, und
eine Seitenfläche eines Endes des zweiten Deflektorlochabschnitts (2122) mit einer Innenwand des zweiten vorstehenden Abschnitts (2132) verbunden ist; und/oder wobei:
L₄ eine Länge des ersten vorspringenden Abschnitts (2131) darstellt und L₅ eine Länge des zweiten vorspringenden Abschnitts (2132) darstellt, und
L₄/L₅ nicht kleiner als 0,4 und nicht größer als 0,85 ist.

7. Elektronische Expansionsventil (100) gemäß Anspruch 6, wobei:
L₂ eine Länge des Rektifikationslochabschnitts (2123) darstellt und L₃ eine Länge des zweiten Deflektorlochabschnitts (2122) darstellt, und
(L₂+L₃)/(L₄+L₅) nicht kleiner als 0,4 und nicht größer als 0,85 ist.

8. Elektronisches Expansionsventil (100) gemäß Anspruch 1, wobei eine innere Seitenwand des Nadelhülsenhohlraums (211) mit einem Hauptüberlaufloch (214) versehen ist, das mit dem Hauptventilhohlraum (11) in Verbindung steht.

9. Elektronisches Expansionsventil (100) gemäß Anspruch 8, wobei:
das elektronische Expansionsventil (100) ferner ein Querrohr (4) umfasst, das mit dem Hauptventilhohlraum (11) verbunden ist,
sich das Querrohr (4) entlang einer radialen Richtung der Ventilnadelhülse (21) erstreckt, und
das Hauptüberlaufloch (214) mit dem Querrohr (4) entlang der Richtung zur Außenseite des Hauptventilanschlusses (212) versetzt ist; und/oder wobei:
β einen eingeschlossenen Winkel zwischen einer Mittellinie des Hauptüberlauflochs (214) und einer Radialebene der Ventilnadelhülse (21) darstellt, und
β nicht kleiner als 30° und nicht größer als 60° ist; wobei β vorzugsweise gleich 45° ist.

10. Elektronisches Expansionsventil (100) gemäß Anspruch 8, wobei:
D_{S} einen Innendurchmesser des Nadelhülsenhohlraums (211) darstellt und d einen Lochdurchmesser des Hauptüberlauflochs (214) darstellt, und
d größer als 1,8 mm und kleiner als 0,71D_{S} ist; und/oder wobei eine Vielzahl der Hauptüberlauflöcher (214) entlang eines Umfangs des Hauptventilhohlraums (11) beabstandet sind.

11. Elektronisches Expansionsventil (100) gemäß Anspruch 8, wobei:
die Ventilnadelanordnung (2) ferner eine Ventilnadel (22) umfasst, die im Inneren der Ventilnadelhülse (21) vorgesehen ist,
die Ventilnadel (22) Folgendes umfasst:
einen beweglichen Bereich (222), der hermetisch mit der Ventilnadelhülse (21) abgedichtet und in ihr verschiebbar montiert ist; und
einen Spitzenbereich (221), der mit dem beweglichen Bereich (222) verbunden und zumindest teilweise im Inneren der Hauptventilöffnung (212) vorgesehen ist,
der bewegliche Bereich (222) einen Abdeckabschnitt (2221) umfasst, der das Hauptüberlaufloch (214) zumindest teilweise abdeckt, und
zumindest der Abdeckabschnitt (2221) des beweglichen Bereichs (222) in einer verringerten Größe vorgesehen ist, um einen ringförmigen Verbindungshohlraum (5) auszubilden, der mit dem Hauptüberlaufloch (214) zwischen dem Abdeckabschnitt (2221) und der Ventilnadelhülse (21) in Verbindung steht.

12. Elektronisches Expansionsventil (100) gemäß Anspruch 11, wobei:
D_{f2} einen Außendurchmesser des Abdeckabschnitts (2221) darstellt und D_{S} einen Innendurchmesser des Nadelhülsenhohlraums (211) darstellt, und
D_{f2}/D_{S} größer als 0,8 und kleiner als 0,98 ist; wobei:
Lₚ vorzugsweise einen Abstand zwischen einer von dem Hauptventilanschluss (212) entfernten Endfläche des Abdeckabschnitts (2221) und einer von dem Hauptventilanschluss (212) entfernten Endfläche der Ventilnadelhülse (21) darstellt, und
Lₚ/D_{S} vorzugsweise nicht kleiner als 0,8 und nicht größer als 1,7 ist.

13. Elektronisches Expansionsventil (100) gemäß Anspruch 1, wobei:
die Ventilnadelanordnung (2) eine Ventilnadel (22) umfasst, die im Inneren der Ventilnadelhülse (21) vorgesehen ist,
die Ventilnadel (22) zur Einstellung entlang einer Längsrichtung der Ventilnadelhülse (21) beweglich ist, und
ein Spitzenbereich (221) der Ventilnadel (22) zumindest teilweise innerhalb des Hauptventilanschlusses (212) vorgesehen ist.

14. Kältemittelzirkulationsleitung, **dadurch gekennzeichnet, dass** sie ein elektronisches Expansionsventil (100) gemäß einem der Ansprüche 1 bis 13 umfasst.

15. Klimaanlagensystem, **dadurch gekennzeichnet, dass** es eine Kältemittelzirkulationsleitung gemäß Anspruch 14 umfasst.

## Revendications

1. Soupape de détente électronique (100) comprenant :
un siège de soupape (1) formé avec une cavité de soupape principale (11) ; et
un ensemble de pointeau de soupape (2) comprenant un manchon de pointeau de soupape (21) prévu à l'intérieur de la cavité de soupape principale (11),
dans laquelle le manchon de pointeau de soupape (21) est formé avec une cavité de manchon de pointeau (211) et une paroi d'extrémité de la cavité de manchon de pointeau (211) est définie avec un orifice de soupape principal (212),
l'orifice de soupape principale (212) comprend :
une première section de trou déflecteur (2121) ;
une deuxième section de trou déflecteur (2122), dans laquelle la première section de trou déflecteur (2121) et la deuxième section de trou déflecteur (2122) sont réparties le long d'une direction vers un extérieur de l'orifice de soupape principal (212) ; et
une section de trou de rectification (2123) prévue entre la première section de trou de déflecteur (2121) et la deuxième section de trou de déflecteur (2122), dans laquelle la section de trou de rectification (2123) est raccordée à la première section de trou de déflecteur (2121), et
dans laquelle un diamètre de trou de la section de trou de rectification (2123) est plus grand qu'un diamètre de trou de la première section de trou de déflecteur (2121) de manière à former un palier entre la section de trou de rectification (2123) et une paroi interne de la première section de trou de déflecteur (2121),
dans laquelle l'ensemble de pointeau de soupape (2) comprend en outre un pointeau de soupape (22) prévu à l'intérieur du manchon de pointeau de soupape (21),
une partie de pointe (221) du pointeau de soupape (22) est au moins en partie prévue à l'intérieur de l'orifice de soupape principal (212),
**caractérisée en ce que**
L représente une distance entre une face d'extrémité de la partie de pointe (221) et une paroi inférieure de la cavité de manchon de pointeau (211) ; L₁ représente une longueur de la première section de trou de déflecteur (2121) ; L₂ représente une longueur de la section de trou de rectification (2123) ; et L₃ représente une longueur de la deuxième section de trou de déflecteur (2122), et
L n'est pas inférieure à L₁+L₂+L₃ et n'est pas supérieure à 1,5(L₁+L₂+L₃).

2. Soupape de détente électronique (100) selon la revendication 1, dans laquelle :
D représente le diamètre de trou de la première section de trou de déflecteur (2121) et D₁ représente le diamètre de trou de la section de trou de rectification (2123), et
D₁/D n'est pas inférieur à 2.

3. Soupape de détente électronique (100) selon la revendication 1, dans laquelle :
une extrémité du manchon de pointeau de soupape (21) formant l'orifice de soupape principal (212) fait saillie vers l'extérieur depuis la cavité de soupape principale (11) pour former une partie faisant saillie (213),
la soupape de détente électronique (100) comprend en outre un tuyau vertical (3), et une extrémité du tuyau vertical (3) s'emmanche à l'extérieur sur la partie faisant saillie (213),
D_{L} représente un diamètre intérieur du tuyau vertical (3) et D₂ représente un diamètre intérieur d'une extrémité de l'orifice de soupape principal (212), et
(D_{L}-D₂)/D₂ n'est pas inférieur à 0,1 et n'est pas supérieur à 0,4.

4. Soupape de détente électronique (100) selon la revendication 3, dans laquelle :
D₁ représente le diamètre de trou de la section de trou de rectification (2123), et
D₁/D₂ n'est pas inférieur à 0,65 et n'est pas supérieur à 0,85.

5. Soupape de détente électronique (100) selon la revendication 3, dans laquelle :
une surface latérale de la partie faisant saillie (213) présente une forme de palier,
le long de la direction vers l'extérieur de l'orifice de soupape principal (212), la partie faisant saillie (213) comprend une première section faisant saillie (2131) avec un diamètre de trou plus grand et une deuxième section faisant saillie (2132) avec un diamètre de trou plus petit, dans laquelle la première section faisant saillie (2131) et la deuxième section faisant saillie (2132) sont raccordées de manière séquentielle, et
le tuyau vertical (3) s'emmanche à l'extérieur sur la première section faisant saillie (2131), et un espace de retenue de liquide (31) est formé entre la deuxième section faisant saillie (2132) et le tuyau vertical (3).

6. Soupape de détente électronique (100) selon la revendication 5, dans laquelle :
un diamètre intérieur de la deuxième section de trou de déflecteur (2122) augmente progressivement le long de la direction vers l'extérieur de l'orifice de soupape principal (212), et
une surface latérale d'une extrémité de la deuxième section de trou de déflecteur (2122) est raccordée à une paroi intérieure de la deuxième section faisant saillie (2132) ; et/ou dans laquelle :
L₄ représente une longueur de la première section faisant saillie (2131) et L₅ représente une longueur de la deuxième section faisant saillie (2132), et
L₄/L₅ n'est pas inférieur à 0,4 et n'est pas supérieur à 0,85.

7. Soupape de détente électronique (100) selon la revendication 6, dans laquelle :
L₂ représente une longueur de la section de trou de rectification (2123) et L₃ représente une longueur de la deuxième section de trou de déflecteur (2122), et
(L₂+L₃)/(L₄+L₅) n'est pas inférieur à 0,4 et n'est pas supérieur à 0,85.

8. Soupape de détente électronique (100) selon la revendication 1, dans laquelle une paroi latérale intérieure de la cavité de manchon de pointeau (211) est pourvue d'un trou principal de trop-plein (214) en communication avec la cavité de soupape principale (11).

9. Soupape de détente électronique (100) selon la revendication 8, dans laquelle :
la soupape de détente électronique (100) comprend en outre un tuyau transversal (4) en communication avec la cavité de soupape principale (11),
le tuyau transversal (4) s'étend le long d'une direction radiale du manchon de pointeau de soupape (21), et
le trou principal de trop-plein (214) est décalé par rapport au tuyau transversal (4) le long de la direction vers l'extérieur de l'orifice principal de soupape (212) ; et/ou dans laquelle
β représente un angle inclus entre une ligne centrale du trou principal de trop-plein (214) et un plan radial du manchon de pointeau de soupape (21), et
β n'est pas inférieur à 30° et n'est pas supérieur à 60° ; dans laquelle β est égal à 45°.

10. Soupape de détente électronique (100) selon la revendication 8, dans laquelle :
D_{S} représente un diamètre intérieur de la cavité de manchon de pointeau (211) et d représente un diamètre de trou du trou principal de trop-plein (214), et
d est supérieur à 1,8 mm et est inférieur à 0,71Ds ; et/ou dans laquelle une pluralité des trous principaux de trop-plein (214) sont espacés le long d'une circonférence de la cavité de soupape principale (11).

11. Soupape de détente électronique (100) selon la revendication 8, dans laquelle :
l'ensemble de pointeau de soupape (2) comprend en outre un pointeau de soupape (22) prévu à l'intérieur du manchon de pointeau de soupape (21),
le pointeau de soupape (22) comprend :
une partie mobile (222) scellée hermétiquement avec et montée de manière à pouvoir coulisser à l'intérieur du manchon de pointeau de soupape (21) ; et
une partie de pointe (221) raccordée à la partie mobile (222) et au moins en partie prévue à l'intérieur de l'orifice de soupape principal (212),
la partie mobile (222) comprend une section de recouvrement (2221) recouvrant au moins en partie le trou principal de trop-plein (214), et
au moins la section de recouvrement (2221) de la partie mobile (222) est prévue avec une taille réduite de manière à former une cavité de communication annulaire (5) en communication avec le trou principal de trop-plein (214) entre la section de recouvrement (2221) et le manchon de pointeau de soupape (21).

12. Soupape de détente électronique (100) selon la revendication 11, dans laquelle :
D_{f2} représente un diamètre extérieur de la section de recouvrement (2221) et D_{S} représente un diamètre intérieur de la cavité de manchon de pointeau (211), et
D_{f2}/D_{S} est supérieur à 0,8 et est inférieur à 0,98 ; dans laquelle :
Lₚ représente une distance entre une face d'extrémité de la section de recouvrement (2221) à distance de l'orifice de soupape principal (212) et une face d'extrémité du manchon de pointeau de soupape (21) à distance de l'orifice de soupape principal (212), et
de manière préférée Lₚ/Dₛ n'est pas inférieur à 0,8 et n'est pas supérieur à 1,7.

13. Soupape de détente électronique (100) selon la revendication 1, dans laquelle :
l'ensemble de pointeau de soupape (2) comprend un pointeau de soupape (22) prévu à l'intérieur du manchon de pointeau de soupape (21),
le pointeau de soupape (22) peut être déplacé le long d'une direction longitudinale du manchon de pointeau de soupape (21) pour un ajustement, et
une partie de pointe (221) du pointeau de soupape (22) est prévue au moins en partie à l'intérieur de l'orifice de soupape principal (212).

14. Ligne de circulation de réfrigérant, **caractérisée en ce qu'**elle comprend une soupape de détente électronique (100) selon l'une quelconque des revendications 1 à 13.

15. Système de climatisation, **caractérisé en ce qu'**il comprend une ligne de circulation de réfrigérant selon la revendication 14.
